Europäisches Patentamt

European Patent Office

Office européen des brevets

(11) Veröffentlichungsnummer: **0 291 554**
**A1**

## (12) EUROPÄISCHE PATENTANMELDUNG

(21) Anmeldenummer: **87107388.8**

(51) Int. Cl.⁴: **B60R 21/16**

(22) Anmeldetag: **21.05.87**

(43) Veröffentlichungstag der Anmeldung:
**23.11.88 Patentblatt 88/47**

(84) Benannte Vertragsstaaten:
**BE DE ES FR IT NL SE**

(71) Anmelder: **Ignaz Vogel GmbH & Co KG,**
**Fahrzeugsitze**
**Kleinsteinbacher Strasse 42-44**
**D-7500 Karlsruhe 41-Stu(DE)**

(72) Erfinder: **Vogel, Ignaz, Dipl.-Ing.**
**Kleinsteinbacher Str. 44**
**D - 7500 Karlsruhe 41 - Stu(DE)**

(74) Vertreter: **Trappenberg, Hans**
**Postfach 1909**
**D-7500 Karlsruhe 1(DE)**

(54) **Sicherheitseinrichtung für Fahrgäste.**

(57) In der Personenbeförderung dienenden Fahrzeugen, wie Omnibussen, sind im allgemeinen keine Anschnallgurte vorgesehen. Um trotzdem die Passagiere bei einem Aufprall des Fahrzeugs zu schützen, wird nach der Erfindung vorgeschlagen, einen aufblasbaren Sack (8) an der Rückseite (4) des Vordersitzes (2) anzubringen, sowie die Partie des Vordersitzes (9), an der voraussichtlich die Kniee aufschlagen, entweder mit einer starken Polsterung zu versehen oder durchbrechbar auszuführen.

Fig. 1

EP 0 291 554 A1

## Sicherheitseinrichtung für Fahrgäste

Die Erfindung betrifft eine Sicherheitseinrichtung für die Fahrgäste eines der Personenbeförderung dienenden Fahrzeugs mit hintereinander angeordneten Fahrgastsitzen, insbesondere eines Omnibusses, wobei die Fahrgastsitze aus einem auf einem Untergestell angebrachten Sitz bestehen, an dem fest oder verschwenkbar eine Rückenlehne angebracht ist, im wesentlichen bestehend aus einem vorzugsweise aus Kunststoffolie gebildeten aufblasbaren Sack, der im Gefahrenfalle mittels einer Aufblaseinrichtung schützend vor dem Fahrgast aufgeblasen wird, wobei die Aufblaseinrichtung über bei Gefahr ansprechenden Sensor ausgelöst wird.

Im Gegensatz zu Personenwagen besteht in größeren, der Personenbeförderung dienenden Fahrzeugen, keine Anschnallpflicht. Im allgemeinen ist auch Möglichkeit zum Anschnallen, also zum Fixieren des Körpers auf dem Sitz, gar nicht gegeben. Eine Ausnahme bilden Flugzeuge, bei denen die Anschnallgurte jedoch nut dazu dienen, bei extremen Flugbewegungen oder sowie bei Start und Landung etc. die Passagiere auf den Sitzen zu halten.

Wie Unfalluntersuchungen gezeigt haben, bewegen sich die auf den Fahrgastsitzen ruhenden Passagiere beim frontalen oder seitlich/frontalen Aufprall des Fahrzeuges auf ein Hindernis mit praktisch unverminderter Geschwindigkeit weiter, stoßen also mit dieser Geschwindigkeit auch auf die Rückenlehne des Vordersitzes. Da sich die Fahrgäste in sitzender Haltung befinden, schlagen zuerst die Kniee auf der Rückseite des Vordersitzes auf. Ist die Aufschlagfläche steif, so wird die Vorwärtsbewegung der Kniee abrupt abgebremst, was im allgemeinen mit sehr schweren Verletzungen verbunden ist. Da der Oberkörper sich jedoch weiter nach vorne bewegt, bildet sich ein Drehgelenk bei den nunmehr fixierten Knieen, so daß gleichzeitig mit der Vorwärtsbewegung eine Aufwärtsbewegung stattfindet. Danach schlägt dann der Rumpf des Fahrgastes auf die Rückseite des Vordersitzes auf, wobei, je nach der Konstrucktion der Fahrgastsitze und der Wucht des Aufpralls, entweder der Sitz zusammenbricht oder unter Beibehaltung seiner Form den Körper abrupt abbremst. In beiden Fällen sind auch schwere Verletzungen zu erwarten, entweder durch sich in den Körper des Fahrgastes bohrende Sitzteile oder, durch das abrupte Abbremsen, durch innere Verletzungen.

Aufgabe der Erfindung ist es, da es vorerst noch nicht möglich erscheint, einen Anschnallzwang für die Fahrgäste derartiger Personen-Beförderungsfahrzeuge einzuführen, einen passiven Unfallschutz anzugeben, der dem skizzierten Unfallgeschehen Rechnung trägt. Erreicht wird dies auf zweierlei Weise. Zum einen dadurch, daß die Partie der Rückseite des Vordersitzes, auf dem bei einem Unfall die Kniee aufschlagen, stark gepolster wird, so daß die Verletzungsgefahr für die Kniegelenke weitgehend vermieden ist. Weiter wird nach der Erfindung bei der Oberkante des Vordersitzes, an dessen Rückseite, ein beschriebener aufblasbarer Sack vorgesehen, der sich bei extremer Verzögerung des Fahrzeuges, also beim Aufprall des Fahrzeuges auf ein Hindernis, kurzfristig und kurzzeitig aufbläst. Dieser aufgeblasene Sack fängt nunmehr den Körper des Fahrgastes bei seiner Vorwärtsbewegung auf und baut langsam diese Vorwärts-Aufwärtsbewegung ab, weitgehend ohne daß der Passagier mit festen Teilen des Vordersitzes in Berührung kommt. Die zweite Möglichkeit wird nach der Erfindung darin gesehen, daß die Partie des Vordersitzes auf die die Knie voraussichtlich bei einem Unfall auftreffen, ohne jegliche Verstärkung oder Versteifung ausgeführt ist, so daß die Kniee durch diese Partie hindurchbrechen ohne sich zu verletzen. Der nachfolgende Körper trifft sodann auf den aufgeblasenen Sack und wird darin aufgefangen. Vorteilhaft hierbei ist, daß eine Aufwärtsbewegung des Körpers nicht stattfindet, also diese Bewegung auch nicht von dem Material des aufgeblasenen Sacks übernommen werden muß. Verhältnismäßig ist jedoch die Ausführung der Sitze, da sie, obwohl an dieser Stelle keine Verstrebungen beziehungsweise Versteifungen angebracht werden können, doch noch den normalen Steifigkeitsanforderungen genügen müssen.

Zweckmäßigerweise sind alle oder zumindest eine Mehrzahl der Aufblaseinrichtung einem einzigen Sensor zugeordnet. Bei einem Unfall werden dann allerdings gleichzeitig sämtliche Aufblaseinrichtungen betätigt, wordurch nicht nur ein verhältnismäßig lauter Knall entsteht, sondern auch nicht benötigte Säcke aufgeblasen werden. Eine sehr zweckmäßige Ausführung ergibt sich dadurch, daß jeder Aufblaseinrichtung ein Sensor zugeordnet ist, wobei dieser Sensor sodann mit einer Druckplatte versehen sein kann, die durch das Auftreffen der Kniee des zu schützenden Passagiers bewegt wird, wodurch der Sensor ausgelöst, also die Aufblaseinrichtung betätigt wird. Bei dieser Anordnung werden die Säcke also nur dann aufgeblasen, wenn tatsächlich ein Passagier zu schützen ist, wodurch sich insbesondere der entstehende Knall deutlich verringert.

Auf der Zeichnung sind Ausführungsbeispiele des Erfindungsgegenstandes schematisch dargestellt, und zwar zeigen:

Fig. 1 eine Prinzipskizze der hintereinander angeordneten Fahrgastsitze und

Fig. 2 und

Fig. 3 die Rückseite von Vordersitzen.

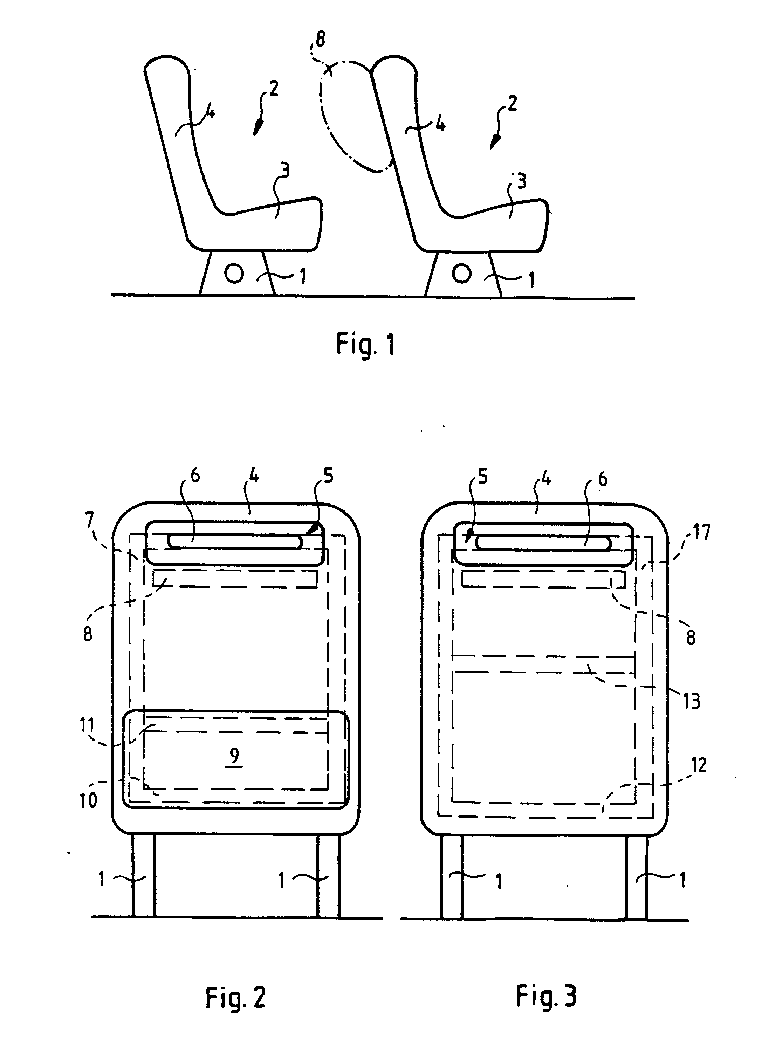

Auf Untergestellen (1) sind Fahrgastsitze (2) aufgebaut, bestehend aus dem eigentlichen Sitz (3) und der daran angebrachten Rückenlehne (4). Die Rückseite der Rückenlehnen (4) ist in den Fig. 2 und 3 dargestellt. Erkennbar ist hier ein in einer Vertiefung (5) der Rückenlehne (4) befindlicher Handgriff (6) sowie auch, gestrichelt eingezeichnet, der zum Aufbau der Rückenlehne (4) benötigte, im allgemeinen aus Stahlrohr bestehende Rahmen (7, 17). Unterhalb der Vertiefung (5) befindet sich hinter einer Abdeckung ein zusammengefalteter Sack (8), der über eine Aufblaseinrichtung, ausgelöst durch einen Verzögerungssen sor, wie in Fig. 1 strichpunktiert dargestellt, aufgeblasen werden kann. In Fig. 2 ist außerdem auch noch eine Polsterfläche (9) erkennbar, die sich an Streben (10, 11) abstützt. In Fig. 3 hingegen sind zwar auch Streben (12, 13) voegesehen, wobei die Strebe (12) jedoch sehr tief angeordnet ist und die Strebe (13) sich etwa in der Mitte der Rückenlehne (4) befindet.

Beim Aufprall des Fahrzeuges auf ein Hindernis bewegt sich der dem Fahrgastsitz (2) sitzende Fahrgast mit unverminderter Geschwindigkeit nach vorne in Richtung auf den Vordersitz zu. Hierbei - schlagen die Kniee, im Beispiel nach Fig. 2, auf die dort befindliche starke Polsterung (9) auf, worauf sich der Körper aufrichtet und in den zwischenzeitlich aufgeblasenen Sack (8), der an der Rückseite des Vordersitzes angebracht ist, fällt. Dadurch wird der Körper weich abgefangen und in seiner Geschwindigkeit abgebremst. Gleichzeitig wird auch die Aufwärtsbewegung des Körpers, hervorgerufen durch den Klappeffekt bei den Knien, durch Reibung oder später auch durch Zerreißen des Sackes (8) gebremst.

Bei der Ausführung nach Fig. 3 durchstoßen die Knie des sich nach vorwärts bewegenden Körpers die Vordersitz-Fläche zwischen den Streben (12, 13), ohne hier wesentlichen Widerstand zu finden, da dieser Teil der Rückenlehne (4) frei von Verstrebungen ist. Anschließend fällt dann auch wiederum der Körper in den aufgeblasenen Sack (8) und bremst ihn mit einer für den Körper erträglichen Verzögerung ab.

## Ansprüche

1. Sicherheitseinrichtung für die Fahrgäste eines der Personenbeförderung dienenden Fahrzeugs mit hintereinander angeordneten Fahrgastsitzen, insbesondere eines Omnibusses, wobei die Fahrgastsitze aus einem auf einem Untergestell angebrachten Sitz bestehen, an dem fest oder verschwenkbar eine Rückenlehne angebracht ist, im wesentlichen bestehend aus einem vorzugsweise aus Kunststofffolie gebildeten aufblasbaren Sack, der im Gefahrenfalle mittels einer Aufblaseinrichtung schützend vor dem Fahrgast aufgeblasen wird, wobei die Aufblaseinrichtung über einen bei Gefahr ansprechenden Sensor ausgelöst wird, dadurch gekennzeichnet, daß der Sack bei der Oberkante der Rückseite des Vordersitzes angebracht ist und daß etwa in Höhe der Sitzfläche des dahinter befindlichen Sitzes (3) eine starke Polsterung (9) vorgesehen ist.

2. Sicherheitseinrichtung nach Anspruch 1, dadurch gekennzeichnet, daß der Sitz (3) beziehungsweise die Rückenlehne (4) an der Stelle der Polsterung (9) versteift (10, 11) ist.

3. Sicherheitseinrichtung nach Anspruch 1 oder 2, dadurch gekennzeichnet, daß die Polsterung (9) bündig mit der Fläche Rückseite abschließt.

4. Sicherheitseinrichtung für die Fahrgäste eines der Personenbeförderung dienenden Fahrzeugs mit hintereinander angeordneten Fahrgastsitzen, insbesondere eines Omnibusses, wobei die Fahrgastsitze aus einem auf einem Untergestell angebrachten Sitz bestehen, an dem fest oder verschwenkbar eine Rückenlehne angebracht ist, im wesentlichen bestehend aus einem vorzugsweise aus Kunststofffolie gebildeten aufblasbaren Sack, der im Gefahrenfalle mittels einer Aufblaseinrichtung schützend vor dem Fahrgast aufgeblasen wird, wobei die Aufblaseinrichtung über einen bei Gefahr ansprechenden Sensor ausgelöst wird, dadurch gekennzeichnet, daß der Sack bei der Oberkante der Rückseite des Vordersitzes angebracht ist und daß etwa in Höhe der Sitzfläche des dahinter befindlichen Sitzes (3) keinerlei Verstrebungen beziehungsweise Versteifungen vorgesehen sind.

5. Sicherheitseinrichtung nach einem oder mehreren der vorhergehenden Ansprüche, dadurch gekennzeichnet, daß jedem Sack (8) eine Aufblaseinrichtung zugeordnet ist.

6. Sicherheitseinrichtung nach einem oder mehreren der vorhergehenden Ansprüche, dadurch gekennzeichnet, daß mehrere bis alle Aufblaseinrichtung einem Sensor zugeordnet sind.

7. Sicherheitseinrichtung nach einem oder mehreren der vorhergehenden Ansprüche, dadurch gekennzeichnet, daß jeder Aufblaseinrichtung ein Sensor zugeordnet ist.

8. Sicherheitseinrichtung nach Anspruch 7,
dadurch gekennzeichnet,
daß der das Aufblasen des Sacks (8) bewirkende
Sensor an der Rückseite des Vordersitzes etwa in
Höhe der Sitzfläche des dahinter befindlichen Sitzes (3) angeordnet und mit einer auslösenden
Druckplatte verbunden ist.

VW0811

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 606 640 (DAIMLER-BENZ) * Seite 7, Zele 4 - Seite 8, Zeile 9 * | 1,8 | B 60 R 21/16 |
| Y | | 6 | |
| | --- | | |
| Y | GB-A-1 168 164 (EATON, YALE & TOWNE) * Figuren 1, 10 * | 1 | |
| A | | 6,8 | |
| | --- | | |
| Y | US-A-3 827 752 (BISSINGER) * Spalte 4, Zeile 49 - Spalte 5, Zeile 30 * | 1,6 | |
| | --- | | |
| A | US-A-3 874 695 (ABE et al.) * Figuren 6-8 * | 5,6 | |
| | --- | | |
| A | US-A-4 417 750 (BURRY) * Spalte 2, Zeile 57 - Spalte 3, Zeile 17 * | 8 | |
| | ----- | | |

**RECHERCHIERTE SACHGEBIETE (Int. Cl.4)**

B 60 R 21/00

Der vorliegende Recherchenbericht wurde für alle Patentansprüche erstellt

| Recherchenort | Abschlußdatum der Recherche | Prüfer |
|---|---|---|
| BERLIN | 16-12-1987 | STANDRING M A |